# EUROPEAN PATENT APPLICATION

(11) **EP 3 753 907 A1**
(43) Date of publication of application: **23.12.2020**
(21) Application number: 19755223.5
(22) Date of filing: 31.01.2019
(51) Int. Cl.: C02F 1/32, C02F 1/30, C02F 103/10

(54) **INJECTED WATER TREATMENT METHOD, INJECTED WATER TREATMENT DEVICE AND APPLICATION THEREOF**

(30) Priority: 13.02.2018 CN 201810150134
(71) Applicant: Graduate School at Shenzhen, Tsinghua University, Shenzhen, Guangdong 518055 (CN)
(72) Inventor: CHEN, Daoyi, Shenzhen, Guangdong 518055 (CN); QIAO, Yang, Shenzhen, Guangdong 518055 (CN)
(74) Representative: Zaboliene, Reda
(86) International application number: PCT/CN2019/074191
(87) International publication number: WO 2019/157976

(57) **Abstract**

The present disclosure provides a method for treating injecting water, a device for treating injecting water, and an system for treating injecting water. The present disclosure relates to field of water injection. The method for treating injecting water includes irradiating the injecting water by UV light of a wavelength of 280 nm at a preset strength of irradiation. In the present disclosure, the economy and the efficiency of injecting water treatment can be balanced to the greatest extent.

## Description

### FIELD

The disclosure relates to field of water injection, and more particularly, to a method for treating injecting water, a device for treating injecting water, and an application thereof.

### BACKGROUND

In oil exploration, water injection equipments are often used to inject water of a certain quality into fossil oil layers, thereby maintaining or increasing the pressure in the fossil oil layer and achieving a higher fossil oil yield. In transportions byships, the water injection equipments are also used to inject water of a certain quality to the balast tank on the ship, thereby maintaining the stability of the ship. In water treatment plants, the water injection equipment injects water to specific containers, thereby achieving water purification.

During the operation of the water injection equipments, microorganisms, such as saprophyte bacteria, iron bacteria, and sulfate-reducing bacteria, may corrode the water injection equipment and their pipelines, which may cause blockages in the pipelines and safety hazards. In addition, the microorganisms may also affect the certain qualities of water required.

### SUMMARY

In view of the above, a method for treating injecting water, a device for treating injecting water, and an application thereof are needed, which can balance between economy and efficiency during the treatment to injecting water.

A first aspect of the present disclosure provides a method for treating injecting water. The method includes irradiating the injecting water by UV light of a wavelength of 280 nm at a preset strength of irradiation.

Furthermore, irradiating the injecting water by UV light of a wavelength of 280 nm at a preset strength of irradiation comprises at least one of: irradiating the injecting water by UV light of the wavelength of 280 nm emitted by a UV LED lamp at the preset strength of irradiation; and irradiating the injecting water by UV light of the wavelength of 280 nm emitted by a UVB lamp tube at the preset strength of irradiation.

Furthermore, the preset strength of irradiation is 15 mJ/cm².

A second aspect of the present disclosure provides a device for treating injecting water, which includes a water injection inlet, an irradiation treatment chamber, a water injection outlet, and a UV lamp. The irradiation treatment chamber is disposed between the water injection inlet and the water injection outlet. The UV lamp is disposed in the light treatment chamber. The UV lamp emits UV light of a wavelength of 280 nm, which irradiates the injecting water with a preset strength of irradiation.

Furthermore, the UV lamp is a UV LED lamp. The UV LED lamp includes at least one surface light source array plate. Each of the at least one surface light source array plate includes a surface for guiding the injecting water to the water injection outlet. The surface is a UV light exit surface.

Furthermore, the at least one surface light source array plate includes a plurality of surface light source array plates. Each of the surface light source array plates is parallel to each other.

Furthermore, the at least one surface light source array plate includes a center light source array plate and two side light source array plates disposed on opposite sides of the center light source array plate. The center light source array plate is disposed at a center of the irradiation treatment chamber. The side light source array plate comprises a guiding portion at an edge adjacent to the water injection inlet. The guiding portion is configured to guide the injecting water along a side of the side light source array plate away from the center light source array plate.

Furthermore, the guide portion is inclined towards the center light source array plate and the water injection inlet.

A third aspect of the present disclosure provides an system for treating injecting water including a water injection pipeline. The system for treating injecting water further includes any above device for treating injecting water. The device for treating injecting water is disposed on the water injection pipeline.

Furthermore, the system for treating injecting water is one of a subsean system for treating injecting water, a ship's ballast water treatment system, and a domestic or industrial water treatment system. The device for treating injecting water is connected to an water injection end of the water injection pipeline.

In the present disclosure, when the injecting water is irradiated by UV light of the wavelength of 280 nm at the preset strength of irradiation, economy and efficiency are optimally balanced. A good inactivation effect of the microorganisms and a relatively low amount of energy is consumed. The method is environmentally friendly.

### BRIEF DESCRIPTION OF THE DRAWINGS

FIG. 1 is a flowchart of an embodiment of a method for treating injecting water according to the present disclosure.
FIG. 2 is a graph showing inactivation rates of saprophyte bacteria when irradiated by a UV LED lamp emitting different wavelengths.
FIG. 3 is a graph showing inactivation rates of iron bacteria when irradiated by a UV LED lamp emitting different wavelengths.
FIG. 4 is a graph showing inactivation rates of sulfate-reducing bacteria when irradiated by a UV LED lamp emitting different wavelengths.
FIG. 5 is a graph of energy consumption corresponding to the inactivation rates, logarithmically expressed, of saprophyte bacteria, iron bacteria, and sulfate-reducing bacteria, when irradiated by a UV LED lamp emitting different wavelengths.
FIG. 6 is a graph showing inactivation rates of saprophyte bacteria when irradiated by a UV LED lamp of a wavelength of 280 nm, different concentrations of particles being presented.
FIG. 7 is a diagrammatic view of a device for treating injecting water according to the present disclosure.
FIG. 8 is a diagrammatic view of a first embodiment of a device for treating injecting water according to the present disclosure.
FIG. 9 is a diagrammatic view of a second embodiment of a device for treating injecting water according to the present disclosure.
FIG. 10 is diagrammatic view showing a UV LED lamp and a direction of flow of water in the second embodiment of the present disclosure.
FIG. 11 is a diagrammatic view of an embodiment of an system for treating injecting water according to the present disclosure.

Description of symbols for main elements:
Device for treating injecting water 1, 2, 3, 42
Water injection inlet 11, 21, 31
Irradiation treatment chamber 12, 22, 32
Water injection outlet 13, 23, 33
UV lamp 14, 24, 34
Center light source array plate 341
Side light source array plate 342
Guiding portion 343
System for treating injecting water 4
Water injection pipe line 41

Implementations of the disclosure will now be described, with reference to the drawings.

### DETAILED DESCRIPTION OF THE DISCLOSURE

Implementations of the disclosure will now be described, by way of embodiments only, with reference to the drawings. The disclosure is illustrative only, and changes may be made in the detail within the principles of the present disclosure. It will, therefore, be appreciated that the embodiments may be modified within the scope of the claims.

Unless otherwise defined, all technical terms used herein have the same meaning as commonly understood by one of ordinary skill in the art. The technical terms used herein are not to be considered as limiting the scope of the embodiments.

Implementations of the disclosure will now be described, by way of embodiments only, with reference to the drawings. It should be noted that non-conflicting details and features in the embodiments of the present disclosure may be combined with each other.

The disclosure provides a device for treating injecting water and an system for treating injecting water, which can be widely promoted and applied.

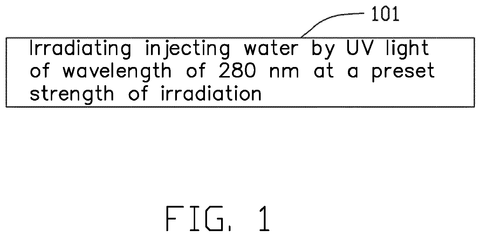

FIG. 1 is a flowchart of an embodiment of a method for treating injecting water according to the present disclosure. The method includes following step.

Step 101: the injecting water is irradiated by UV light of a wavelength of 280 nm at a preset strength of irradiation.

In an embodiment, when the injecting water is irradiated by UV light of the wavelength of 280 nm at the preset strength of irradiation, economy and efficiency are balanced to the greatest extent. Effective inactivation of microorganisms can be achieved. A relatively low amount of energy is consumed. The method is friendly to the environment.

In an embodiment, the injecting water can be irradiated with UV light of a wavelength of 280 nm emitted by a UV LED lamp, and/or, with UV light of a wavelength of 280 nm emitted by a UVB lamp tube.

In an embodiment, the preset strength of irradiation is 15 mJ/cm². Inactivation of microorganisms is largely effective using the preset strength of irradiation, and the energy consumption is not high.

Microorganisms that may corrode the water injection equipment and corresponding pipelines mainly include saprophytic bacteria, iron bacteria, and sulfate reducing bacteria. The principles and the advantages of the present disclosure are illustrated by water samples having saprophytic bacteria, iron bacteria, and sulfate-reducing bacteria of a concentration of 10⁵-10⁶ cfu/mL (a total number of bacteria contained in each milliliter sample). Each water sample, which has a bacteria concentration of 10⁵-10⁶ cfu/mL, is disinfected by a UV lamp emitting wavelengths of 255 nm, 280 nm, and 350 nm. An average irradiation intensity on the water sample is 51 uW/cm².

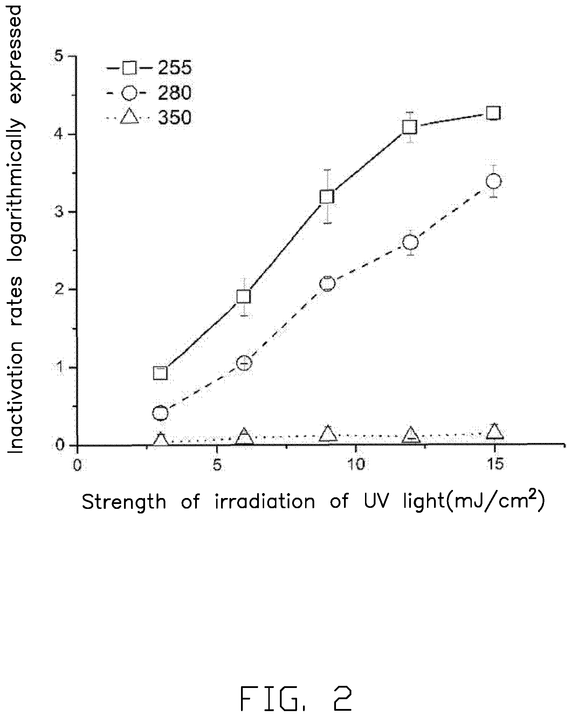

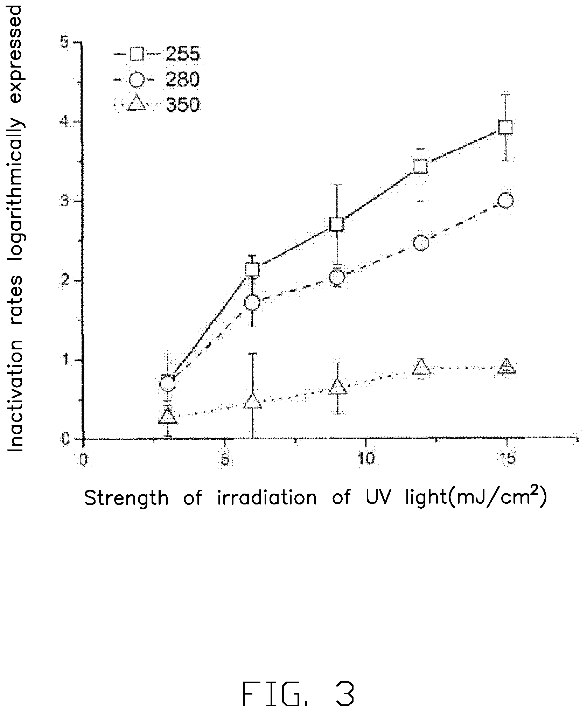

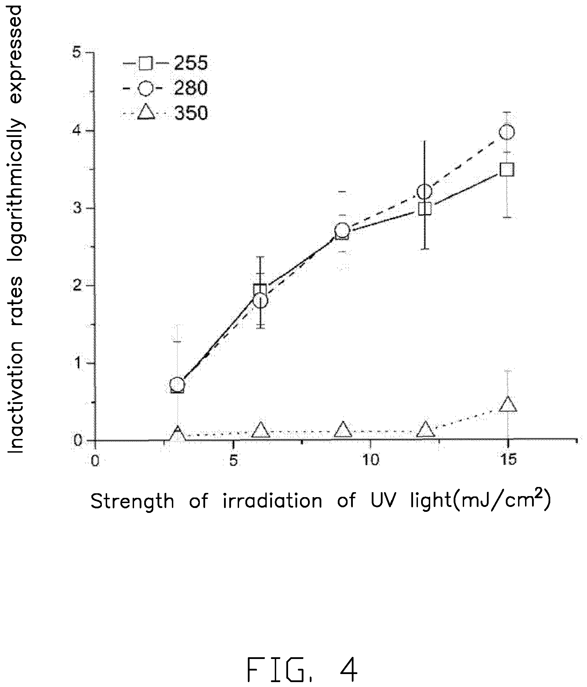

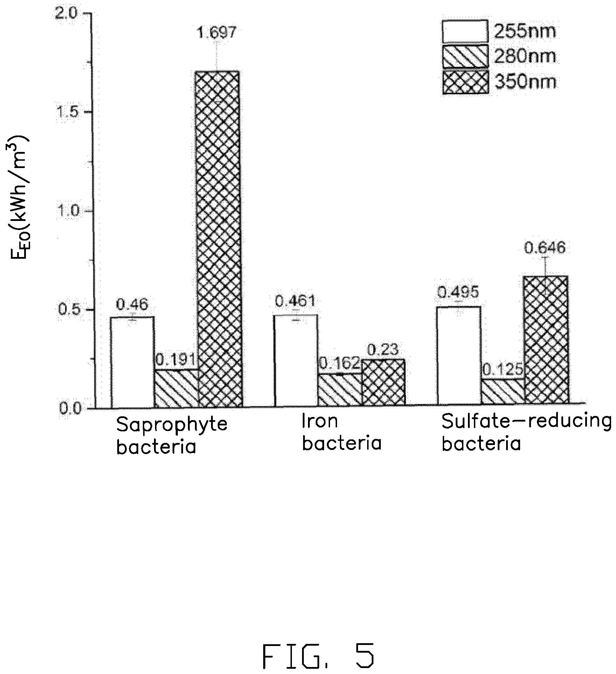

FIGS. 2, 3, and 4 respectively illustrate the inactivation rates of saprophytic bacteria, iron bacteria, and sulfate-reducing bacteria when irradiated by the UV LED lamp. FIG. 5 illustrates the energy consumption corresponding to the inactivation rates, logarithmically expressed, when irradiated by a UV LED lamp emitting three different wavelengths. FIGS. 2, 3, and 4 respectively illustrate results when irradiated by the UV LED lamp as a light source emitting wavelengths of 255 nm, 280 nm, and 350 nm. By comparison, although the inactivation effect at the wavelength of 255 nm is better than that at the wavelength of 280 nm at irradiation strength of 15 mJ/cm², but the UV LED lamp of the wavelength of 255 nm has high cost and low power conversion efficiency. The energy consumption corresponding to the inactivation rate, logarithmically expressed, at the wavelength of 280 nm is significantly lower than that of the wavelength of 255 nm. The wavelength of 280 nm thus balances economy and efficiency to the greatest extent. In addition, a degree of resurrection or recovery of the microorganisms after irradiation at the wavelength of 280 nm is significantly lower, avoiding the widespread resurrection of the microorganisms at other wavelengths.

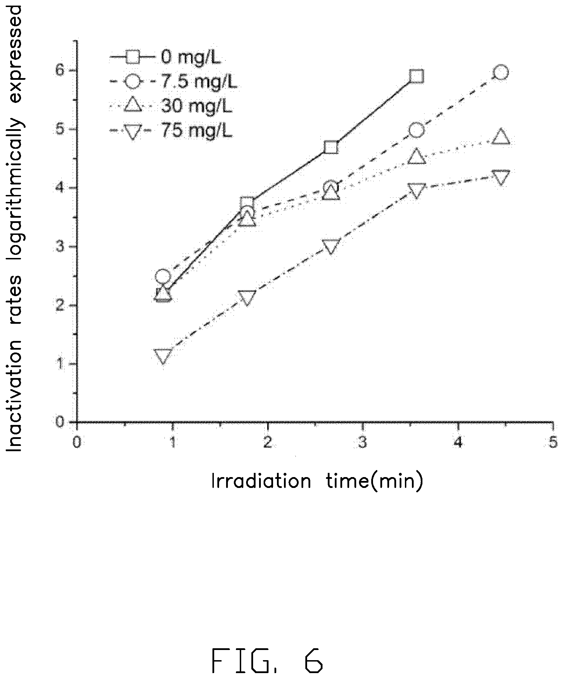

It can be understood that the concentration of particles in water is the key factor affecting the UV disinfection effect. Different concentrations of particles are added to the water sample, while the sample having saprophytic bacteria of 10⁵-10⁶ cfu/mL. Then, the water sample is disinfected by UV LED of wavelength of 280 nm. FIG. 6 shows inactivation rates of saprophyte bacteria when irradiated by a UV LED lamp of a wavelength of 280 nm, and different concentrations of particles are presented. FIG. 6 includes inactivation rates when the concentrations of the particles are constant, compared with the inactivation rates when no particles are added. The inactivation rates in the present disclosure are less affected by particles in a low concentration. When the concentration of the particles is below 30 mg/L, the inactivation rate at the wavelength of 280 nm is within 10% of the inactivation rate when no particles are included.

FIGS. 2 to 6 show that economy and efficiency can be balanced to the greatest extent when the microorganisms are irradiated by UV light of the wavelength of 280 nm. That is, a better inactivation rate can be achieved while the treatment cost and the maintenance cost is not high. The method can be promoted and applied on a large scale.

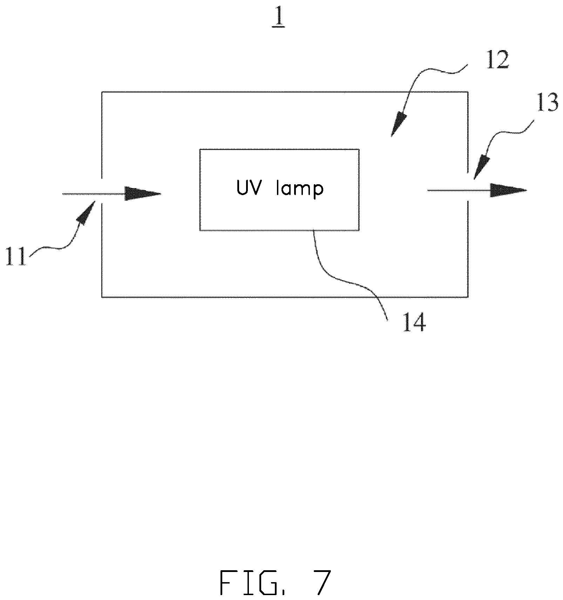

FIG. 7 is a diagrammatic view of an device for treating injecting water according to the present disclosure. The device for treating injecting water 1 can be applied in an system for treating injecting water. Referring to FIG. 7, the device for treating injecting water 1 includes a water injection inlet 11, an irradiation treatment chamber 12, and a water injection outlet 13. The water injection inlet 11 is connected to a water injection pipeline (not shown), to allow water to flow into the irradiation treatment chamber 12. The water injection outlet 13 is connected to a downstream water injection pipeline (not shown) of the device for treating injecting water 1, so that the injecting water after treatment can flow out of the irradiation treatment chamber 12.

In an embodiment, the device for treating injecting water 1 may treat the injecting water by the above method for treating injecting water.

A UV lamp 14 is disposed in the light treatment chamber 12, which is between the water injection inlet 11 and the water injection outlet 13. The UV light emitted by the UV lamp 14 has a wavelength of 280 nm. The UV light at such wavelength is used to irradiate the injecting water to achieve a better inactivation of microorganisms, is more friendly to the environment, has a low maintenance cost, and is of wide application.

Different materials in a UV lamp will emit UV light of different wavelengths. In an embodiment, the UV lamp is a UV LED lamp. The wavelengths of light from 255 nm to 265 nm (deep UV light) largely overlaps absorption peak of DNA, thus the UV lamp causes the greatest inactivation of microorganisms. However, limited by the manufacturing technology and the material of the UV LED lamp, the shorter the wavelength of the UV LED lamp, the higher is the cost of the lamp, the shorter its life span, and the lower is the power conversion efficiency. Although longer-wavelength UV (in the UVB/UVA range) emitted by a UV lamp is more economical, the longer wavelengths are less effective for inactivating the microorganisms. Considering the economy and the higher efficiency, a UV LED lamp of a wavelength of 280 nm is selected as the light source.

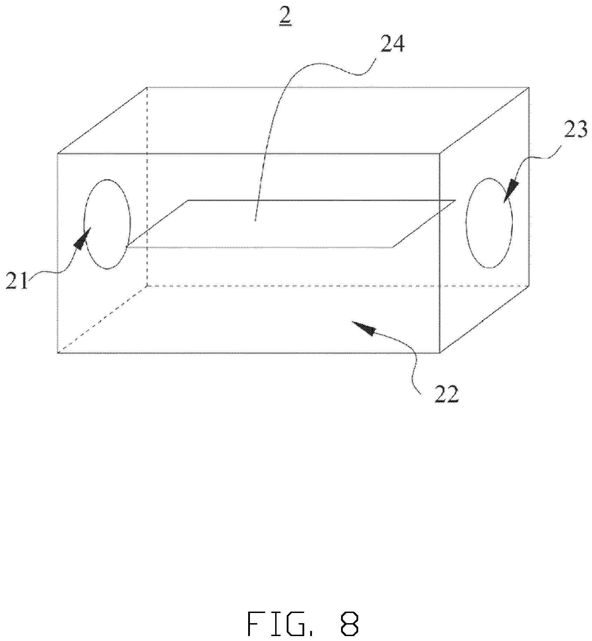

FIG. 8 is a diagrammatic view of a first embodiment of an device for treating injecting water according to the present disclosure. In the embodiment, the device for treating injecting water 2 includes a water injection inlet 21, an irradiation treatment chamber 22, and a water injection outlet 23. The UV lamp 24 disposed in the irradiation treatment chamber 22 is a UV LED lamp. The UV LED lamp emits UV light of a wavelength of 280 nm.

In the embodiment, the UV LED lamp includes a surface light source array plate. The surface light source array plate includes a surface for guiding the injecting water to the water injection outlet. The surface is a UV light exit surface. When the UV light of the wavelength of 280 nm is emitted from the surface of the surface light source array plate, the UV light uniformly irradiates the injecting water flowing across the surface. Since the UV LED lamp is a surface light source, the irradiation area is increased, increasing the irradiation efficiency applied to the water the efficiency of inactivating the microorganisms.

The UV LED may include at least one surface light source array plate. When the number of the surface light source array plates is greater than one, the surface light source array plates may be parallel to each other.

UV LED lamp beads are disposed on the surface light source array plate, which form a surface light source when energized.

It can be understood that each of two opposite surfaces of the surface light source array plate can be used to emit UV light. That is, the two surfaces of the surface light source array plate can realize the function of the above surface.

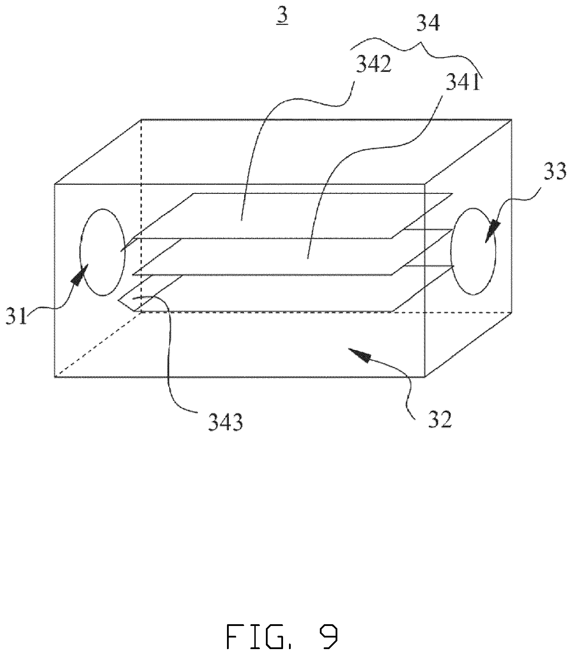

FIG. 9 is a diagrammatic view of a second embodiment of an device for treating injecting water according to the present disclosure. In the embodiment, the device for treating injecting water 3 specifically includes a water injection inlet 31, a irradiation treatment chamber 32, and a water injection outlet 33.

In the embodiment, the UV lamp 24 disposed in the irradiation treatment chamber 32 is a UV LED lamp. The UV light emitted by the UV LED lamp has a wavelength of 280 nm. The difference from the first embodiment is that the UV LED lamp of this embodiment includes a center light source array plate 341 and two side light source array plates 342 disposed on opposite sides of the center light source array plate 341. The center light source array plate 341 is disposed at a center of the irradiation treatment chamber 32. The side light source array plate 342 includes a guiding portion 343 at an edge adjacent to the water injection inlet 31, to guide the injecting water along a side of the side light source array plate away from the center light source array plate 341.

The arrangement of the three light source array plates increases the irradiated area of the injecting water and improves the inactivation efficiency of microorganisms. The guiding portion 343 guides the injecting water to the a light-emitting surface, from which the injecting water is irradiated by the UV light. The fluidity of the injecting water accross a side of the side light source array plate 342 away from the center light source array plate 341 can also be increased.

In the embodiment, the guiding portion 343 is inclined towards the center light source array plate 341 and the water injection inlet 31.

It is understandable that the number of the side surface light source array plates can be increased according to need, thereby obtaining desired inactivation efficiency of microorganisms.

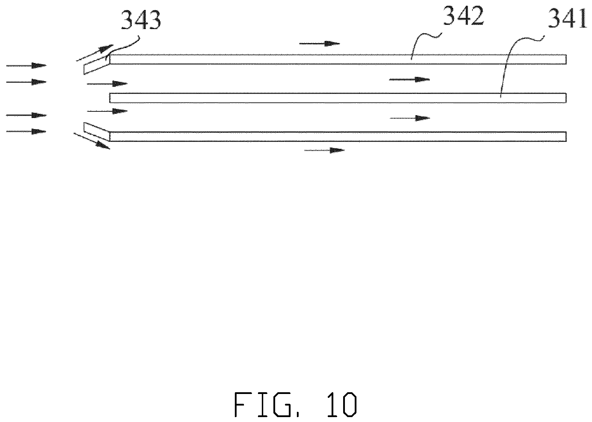

FIG. 10 is diagrammatic view showing a UV LED lamp and a flow direction of injecting water in the second embodiment of the present disclosure. After the injecting water flows into the irradiation treatment chamber (not shown) from the water injection inlet (not shown), the injecting water is guided by the guiding portion 343, thereby forming four streams of water flowing along the upper surface and the lower surface of the upper side surface light source array plate 342, and the upper surface and the lower surface of the lower side surface light source array plate 342, to the water injection outlet (not shown).

In the embodiment, the upper side light source array plate and the lower side light source array plate are mirror-symmetrical with respect to the center light source array plate 341.

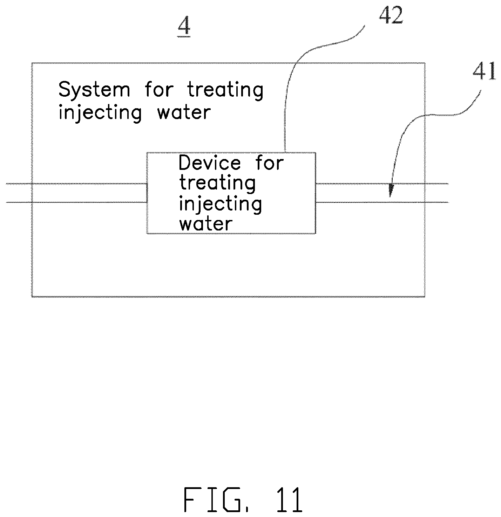

FIG. 11 is a diagrammatic view of an embodiment of an system for treating injecting water 4 according to the present disclosure. The system for treating injecting water 4 includes a water injection pipeline 41 and an device for treating injecting water 42. The device for treating injecting water 42 may be any one of the device for treating injecting waters 1, 2, and 3. The device for treating injecting water 42 is disposed on the water injection pipeline 41.

In an embodiment, the device for treating injecting water 42 is connected to an water injection end of the water injection pipeline 41. When the system for treating injecting water 4 is in operation, water is injected towards the water injection end of the water injection pipe 41. When the injecting water passes through the device for treating injecting water 42, the UV light of the wavelength of 280 nm in the device for treating injecting water 42 irradiates the injecting water to achieve effective sterilization.

It is understandable that the system for treating injecting water 4 may be a subsea system for treating injecting water, a ship's ballast water treatment system, or a domestic or industrial water water treatment system. The subsea system for treating injecting water is applied in fossil oil exploitation, that is, water of a certain quality being injected into the fossil oil layer through the subsea system for treating injecting water. Thus, the pressure in the fossil oil layer is maintained or increased, and a higher fossil oil yield is obtained. The ship's ballast water treatment system is applied to transportations by ships, that is, water of a certain quality being injected into the ballast tank of the ship through the ship's ballast water treatment system. Thus, the stability of the ship is maintained. The domestic or industrial water treatment system is applied to water treatment, that is, water being injected into a specific container through the domestic or industrial water treatment system. Thereby, the water is purified.

For those skilled in the art, it is obvious that the present disclosure is not limited to the details of the foregoing exemplary embodiments, and can be implemented in other embodiments without departing from the spirit or basic characteristics of the present disclosure. Therefore, embodiments shown and described above are only examples. The scope of the present disclosure is defined by the appended claims rather than the above embodiments. Thus, changes may be made in the detail, may be modified within the scope of the claims. Any reference signs in the claims should not be regarded as limiting the claims. In addition, the term "comprising," when utilized, means "including, but not necessarily limited to". Multiple units, modules, or devices stated in the claims of a system, a device, or a terminal can also be implemented by the same unit, module, or device through software or hardware. Words such as "first" and "second" are used to denote names, but do not denote any specific order.

The embodiments shown and described above are only examples. Even though numerous characteristics and advantages of the present technology have been set forth in the foregoing description, together with details of the structure and function of the present disclosure, the disclosure is illustrative only, and changes may be made in the detail within the principles of the present disclosure, up to and including the full extent established by the broad general meaning of the terms used in the claims. It will, therefore, be appreciated that the embodiments described above may be modified within the scope of the claims.

## Claims

1. A method for treating injecting water, **characterized in that**, the method comprises:
irradiating the injecting water by UV light of a wavelength of 280 nm at a preset strength of irradiation.

2. The method for treating injecting water of claim 1, **characterized in that**, irradiating the injecting water by UV light of a wavelength of 280 nm at a preset strength of irradiation comprises at least one of:
irradiating the injecting water by UV light of the wavelength of 280 nm emitted by a UV LED lamp at the preset strength of irradiation; and
irradiating the injecting water by UV light of the wavelength of 280 nm emitted by a UVB lamp tube at the preset strength of irradiation.

3. The method for treating injecting water of claim 1, **characterized in that**, the preset strength of irradiation is 15 mJ/cm².

4. A device for treating injecting water, **characterized in that**, comprises:
a water injection inlet, an irradiation treatment chamber, a water injection outlet, and a UV lamp, the irradiation treatment chamber is disposed between the water injection inlet and the water injection outlet, the UV lamp is disposed in the light treatment chamber, the UV lamp is configured to emit UV light of a wavelength of 280 nm, which irradiates the injecting water with a preset strength of irradiation.

5. The device for treating injecting water of claim 4, **characterized in that**, the UV lamp is a UV LED lamp;
the UV LED lamp comprises at least one surface light source array plate, each of the at least one surface light source array plate comprises a surface for guiding the injecting water to the water injection outlet, and the surface is a UV light exit surface.

6. The device for treating injecting water of claim 5, **characterized in that**, the at least one surface light source array plate comprises a plurality of surface light source array plates, and each of the surface light source array plates is parallel to each other.

7. The device for treating injecting water of claim 6, **characterized in that**, the at least one surface light source array plate comprises a center light source array plate and two side light source array plates disposed on opposite sides of the center light source array plate, the center light source array plate is disposed at a center of the irradiation treatment chamber, the side light source array plate comprises a guiding portion at an edge adjacent to the water injection inlet, the guiding portion is configured to guide the injecting water along a side of the side light source array plate away from the center light source array plate.

8. The device for treating injecting water of claim 7, **characterized in that**, the guide portion is inclined towards the center light source array plate and the water injection inlet.

9. An system for treating injecting water, comprising a water injection pipeline, **characterized in that**, the system for treating injecting water further comprises a device for treating injecting water of any one of claims 4 to 8, and the device for treating injecting water is disposed on the water injection pipeline.

10. The system for treating injecting water of claim 9, **characterized in that**, the system for treating injecting water is one of a subsean system for treating injecting water, a ship's ballast water treatment system, and a domestic or industrial water treatment system, the device for treating injecting water is connected to an water injection end of the water injection pipeline.
